# EUROPEAN PATENT SPECIFICATION

(11) **EP 3 447 280 B1**
(45) Date of publication and mention of the grant of the patent: **16.12.2020**
(21) Application number: 17187046.2
(22) Date of filing: 21.08.2017
(51) Int. Cl.: F03D 1/06, F03D 80/00, F03D 80/40, B66C 1/10, B66C 1/24

(54) **A BULKHEAD UNIT, A WIND TURBINE BLADE COMPRISING THE BULKHEAD UNIT, AND METHODS OF ASSEMBLING AND INSTALLING THE BULKHEAD UNIT**
TRENNWANDEINHEIT, WINDTURBINENROTORBLATT MIT DER TRENNWANDEINHEIT, SOWIE VERFAHREN ZUR MONTAGE UND INSTALLATION DER TRENNWANDEINHEIT
UN MODULE DE CLOISON, UNE PALE DE TURBINE ÉOLIENNE COMPRENANT LE MODULE DE CLOISON, ET PROCÉDÉS D'ASSEMBLAGE ET D'INSTALLATION DE L'UNITÉ DE CLOISON

(43) Date of publication of application: 27.02.2019
(73) Proprietor: LM Wind Power International Technology II ApS, 6000 Kolding (DK)
(72) Inventor: Rogers, Damien, 6000 Kolding (DK); Steffensen, Søren, 6000 Kolding (DK); Skov Bergholt, Johan, 6000 Kolding (DK); Lindby, Torben, 6000 Kolding (DK); Jørgensen, Lars, 6000 Kolding (DK); Kildegaard, Casper, 6000 Kolding (DK)
(74) Representative: COPA Copenhagen Patents

(56) References cited:
- EP-A1- 2 386 515
- EP-A1- 3 014 117
- CN-U- 205 154 494
- US-A1- 2016 047 356
- US-A1- 2017 211 542

## Description

### Technical field

The present invention relates to a bulkhead unit for a wind turbine blade, comprising a bulkhead element and a frame structure, the bulkhead element having a first side surface and an opposite side surface, wherein the frame structure is arranged at one of said first and second side surfaces.

The present invention also relates to a wind turbine blade comprising such a bulkhead unit. The present invention further relates to a method of assembling a bulkhead unit or the wind turbine blade and a method of installing a bulkhead unit in the wind turbine blade.

### Background

It is known to place a bulkhead in the blade root section of a wind turbine blade and bond it to the blade shell. The bulkhead is used to close off the interior of the wind turbine blade so that loose debris, e.g. blocks of excess glue or fluids, e.g. water or oil, are prevented from entering the hub or the wind turbine blade during rotation or servicing. The bulkhead also provides a working platform for the workers during maintenance or repair tasks inside the wind turbine blade or hub.

Ovalisation occurs in the blade root section due to the aerodynamic forces acting on the wind turbine blade during operation. One way to solve this problem is to add extra layers of core material or fibre material in the sandwich laminate of that blade section, however, this adds to the total weight and costs of the wind turbine blade.

The ovalling movement also increases the stresses in the glue line along the circumference of the bulkhead, which may result in cracks or faults in the glue line along the peripheral edge of the bulkhead. Furthermore, gaps or voids may be formed between the inner surface of the blade shell and the peripheral edge of the bulkhead. One way to solve this problem is to use flexible flanges or adjustable collars to attach the bulkhead to the blade shell.

It is further known to install de-icing components, lightning protection components, electrical cables, data cables and other components inside the wind turbine blade. The heater or blower unit of the de-icing system may be installed inside the hub or at the blade root, such as disclosed in WO 2013/107457 A1 or WO 2016/034614 A1, and then connected to interior tubing or chambers extending along the length of the wind turbine blade. Relatively large and heavy heater and blower units are required for large wind turbine blades in order to effectively remove accumulated ice or prevent the formation of ice. This makes the installation inside the wind turbine blade more complicated and time consuming.

WO 2016/026862 A1 discloses a wind turbine blade comprising a bulkhead element formed by a sandwich panel in which openings for drainage outlets, access holes and optional de-icing tubing have been cut. The respective openings have been fitted with reinforcing elements configured to provide additional structural strength to the sandwich panel around each respective opening.

US 2016/0195060 A1 discloses a wind turbine blade comprising two shear webs extending along the blade length to which a de-icing system or an electrical cabinet is mounted. A first and a second mounting frame for the de-icing system or electrical cabinet are arranged on opposite facing sides of the shear webs. Each mounting frame is connected to a first reinforcing plate located between the mounting frame and the shear web and further to a second reinforcing plate located on the opposite side of the shear web. The two reinforcing plates are bolted together via bushings extending through the shear web.

EP 1151917 B1 discloses a bulkhead unit specifically designed for use in pressurized cabinets of small aircrafts. The bulkhead unit comprises a flexible skin having a thickness of 0.8 mm to 2.3 mm which is attached only to a rigid frame structure. The frame structure is mechanically mounted to the surround fuselage using connecting brackets while the skin is spaced apart from the inner surface of the fuselage. Both the flexible skin and the rigid frame structure are made of a fibre-reinforced composite.

CN 205154494 U discloses a dual bulkhead arrangement, wherein the heater unit is positioned between the two bulkheads and the blower unit is positioned between the tip end and inner bulkhead. The blower unit is mounted on a frame structure attached to both the blade shell and the inner bulkhead, and further mounted to a cross bar attached to the inner bulkhead.

### Object of the invention

An object of the invention is to provide a bulkhead unit and a wind turbine blade that solves the abovementioned problems.

Another object of the invention is to provide a bulkhead unit with improved structural support for mounting of additional equipment or components.

Yet another object of the invention is to provide a bulkhead unit that allows for reduced thickness of the bulkhead element for large wind turbine blades.

A further object of the invention is to provide a wind turbine blade that allows for installation of additional equipment or components with increased capacities.

### Detailed description of the invention

One object of the invention is achieved by a bulkhead unit for a wind turbine blade as defined in claim 1.

This allows the bulkhead unit to be pre-assembled prior to being installed within the blade root portion of the wind turbine blade. This eliminates the need for increasing the thickness of the bulkhead element or adding reinforcing elements around the openings in the bulkhead element for added support. Instead, the frame structure provides support for the bulkhead element during rotation of the wind turbine blade. This increases the overall structural performance of the bulkhead unit while saving weight and material of the bulkhead element.

The frame structure also functions as a mounting point for additional components which are used in association with the operation or protection of the wind turbine blade. The term 'additional components' here relates to equipment or units of a de-icing system, a lightning protection system, a measuring system, a control system, lighting system or other systems normally used to control or protect the wind turbine blade. This allows for the use of de-icing systems and other relevant systems with increased capacity. A separate mounting plate may be used to mount each respective component, wherein the mounting plate may adapted to the shape of that respective component. The stresses and loadings introducing by the increased mass of these components can be absorbed by the frame structure and further transferred to the wind turbine blade via the attachment points of the bulkhead unit.

The bulkhead may further function as a working platform for the workers during maintenance or repair tasks inside the wind turbine blade or the hub. The stresses and loading introduced by the workers or by the equipment being moved around may be absorbed by the frame structure and further transferred to the wind turbine blade via the attachment points of the bulkhead unit.

The additional components of these systems may be mounted to the frame structure prior to or after installation of the bulkhead unit inside the wind turbine blade. These additional components may afterwards be coupled to the rest of the respective system via suitable connecting means, e.g. electrical cables, data cables, tube sections, etc.

According to one embodiment, the bulkhead element comprises at least one peripheral flange configured to be attached to the blade shell of the wind turbine blade, wherein said at least peripheral flange projects in one longitudinal direction from the first or second side surface.

The bulkhead element may be formed as a U-shaped element defining a central part extending substantially in a radial direction and a peripheral flange projecting substantially in a longitudinal direction from the central part. The central part may define a first side comprising a first side surface and an opposite second side comprising a second side surface. The peripheral flange may be formed as a continuous flange or individual flanges extending along the circumference of the bulkhead element. The peripheral flange may define an inner edge surface and an opposite outer peripheral edge surface extending in the circumference direction. The outer edge surface may be face towards the inner blade surface when installed.

The peripheral flange may be attached to the inner blade surface of the blade shell using adhesive, or attached to the blade shell using fasteners, such as bolts, screws or rivets. Loads and stresses may thereby be transferred between the blade shell and the bulkhead element via this peripheral flange.

The bulkhead element may alternatively be formed as a plate-shaped element extending in the radial direction, wherein the plate-shaped element defines a first side comprising a first side surface and an opposite second side comprising a second side surface. The bulkhead element may be attached to the blade shell via mounting brackets, adjustable collars, flexible flanges or other suitable attachment means. Alternatively, the bulkhead element may be attached directly to the blade shell using adhesive. This allows loads and stresses to be transferred between the blade shell and the bulkhead element via the respective attachment points.

According to one embodiment, the frame structure has a second peripheral edge facing the inner blade surface of the wind turbine blade when installed, wherein said second peripheral edge is retracted relative the first peripheral edge.

The outer dimensions, e.g. outer diameter, of the frame structure may be smaller than the outer dimensions, e.g. outer diameter, of the bulkhead element. The peripheral edge of the frame structure may thus be retracted relative to the peripheral edge of the bulkhead element. The frame structure may thus be attached to only the bulkhead element. This saves material and weight of the frame structure. This also prevents potential damage to the blade shell caused by contacts between the frame structure and the blade shell during installation of the bulkhead unit.

The peripheral edge of the frame structure may be formed as a tapered end which tapered from one side to the other side. This reduces the risk of the frame structure hitting the inner surface of the blade shell during the ovalling movement. This also reduces the number of sharp corners on the frame structure which may present a safety hazard during assembly of the bulkhead unit.

The peripheral edge of the frame structure may alternatively be formed as a blunt end, e.g. with rounded corners and/or edges.

Alternatively, the outer dimensions, e.g. outer diameter, of the frame structure may be equal to the outer dimensions, e.g. outer diameter, of the bulkhead element. The peripheral edge of the frame structure may thus be aligned with the peripheral edge of the bulkhead element. The frame structure may comprise one or more integrated peripheral flanges suitable for additional attachment to the blade shell. The peripheral flanges may alternatively be formed as separate elements attached to both the frame structure and the blade shell.

The frame elements may define the peripheral edge of the frame structure which extends along the circumference of the frame structure. In example, the peripheral edge may be formed by one or more frame elements extending in a circumference direction and/or by the ends of one or more frame elements terminating at the peripheral edge.

For example, the frame structure may comprise at least one set of main frame elements extending in one direction and at least one set of secondary frame elements connected to the individual main frame elements. Alternatively, the frame structure may comprise a first set of main frame elements extending in a first direction and at least a second set of main frame elements extending in at least a second direction. Secondary frame elements may extend between the individual main frame elements of each set. Optionally, at least one further frame elements may interconnect a main frame element of the first set with a main frame element of the second set.

For example, the frame structure may comprise a set of main frame elements extending in one direction, wherein the individual main frame elements may be spaced apart. The ends of each main frame element may be connected to the bulkhead element, e.g. the central part and/or the peripheral flange. The set may comprise two, three, four or more main frame elements.

The individual main frame elements may function as primary attachments for the additional components and, optionally, as primary load bearing elements. The individual secondary frame elements may function as spacers for the main frame elements and acts as intermediate connections between the primary load bearing elements. The secondary frame elements may alternatively also be used for attachment of the additional components. The main frame elements and the secondary frame elements may thus have the same or different cross-sectional profile or dimensions.

Alternatively, the frame structure may comprise a continuous disc-shaped frame element or a plurality of sub-elements which together form the disc-shaped frame element. This frame element may function as a mounting plate for the additional components. The outer diameter of the frame element may be selected so that it partly or fully covers the corresponding side surface of the central part. Optionally, the frame element may comprise a number of openings corresponding to the openings formed in the central part of the bulkhead element.

Alternatively, the frame structure may comprise at least one rectangular shaped frame element. This rectangular shaped frame element may extend partly or fully along a chord line, e.g. the diameter, of the bulkhead element. The frame element may function as a mounting plate for the additional components.

Alternatively, the frame structure may comprise at least one funnel-shaped frame element. This funnel-shaped frame element may have a first opening facing the bulkhead element and a second opening facing away from the bulkhead element. The dimensions of the first opening may be greater than the dimensions of the second opening, or vice versa. The frame element may comprise one or more projecting flanges arranged at the first and/or second opening. These flanges may be configured to be attached to corresponding flanges arranged on the bulkhead element. The sides of the frame elements or the peripheral edge around the second opening may function as mounting surfaces for mounting of the additional components.

The main frame elements and/or the secondary frame elements may form a number of enclosed areas having a predetermined profile and predetermined inner dimensions. Additionally or alternatively, the main frame elements and/or the secondary frame elements may form a number of open ended areas having a predetermined profile and predetermined inner dimensions. For example, the open ended areas may be arranged along the peripheral edge and the enclosed areas may be arranged between the open ended areas, i.e. towards a central part of the frame structure.

The number of main frame elements and the number of secondary frame elements may be selected dependent on the inner dimensions of the blade root portion and/or on the additional components intended to be mounted to the frame structure. For example, the frame structure may comprise one, two, three, four or more main frame elements and/or secondary frame elements. For example, the frame structure may form one, two, three, four or more open ended areas and/or enclosed areas.

The bulkhead element may comprise one or more openings extending between the first and second side surfaces. The cross-sectional profile and inner dimensions may be selected dependent on the intended purpose and/or the dimensions of the associated component intended to be mounted relative to this opening. The bulkhead element may comprise different openings with different cross-sectional profiles and/or different inner dimensions. For example, the bulkhead element may comprise an access opening, inlet and outlet openings for the de-icing system, an opening for guiding electrical cables and/or optical fibre cables past the bulkhead unit, an opening for guiding lightning down conductors past the bulkhead unit, an opening for draining off fluids from the interior of the wind turbine blade, etc. The electrical cables may include control cables, sensor cables, power cables and other types of electrical cables.

The individual openings may be arranged in the central part and/or in a peripheral part of the bulkhead element.

According to a further special embodiment, said at least one enclosed area and/or said at least one open ended area has inner dimensions substantially equal to or greater than inner dimensions of at least one opening formed in the bulkhead element.

The enclosed area or the open ended area may have inner dimensions substantially corresponding to the inner dimensions of the respective opening. The surround frame elements may provide support around this opening. This may be suited for e.g. the inlet and outlet openings for the de-icing system or the opening for the electrical cables and/or optical fibre cables.

The enclosed area or the open ended area may alternatively have inner dimensions greater than the inner dimensions of one or more respective openings. This may be suited for e.g. the access opening, the drainage opening or the opening for the lightning down conductors. A hatch or a cover may be mounted relative to the respective opening, e.g. the access opening or the drainage opening. The hatch or cover may be attached directly to the bulkhead element or to the frame structure.

According to one embodiment, the bulkhead element comprises a central part and a peripheral part, wherein said central part is configured to be attached to said peripheral part.

The bulkhead element may be formed as a single piece, wherein the central and peripheral parts form a continuous element. The peripheral part includes at least the peripheral edge or flange of the bulkhead element. This simplifies the manufacture of the bulkhead element as it can be manufactured in a single process.

Alternatively, the central part and the peripheral part may be manufactured as separate pieces, wherein the individual pieces are attached to each other to form the bulkhead element. This allows the central part and the peripheral part to be manufactured independently, e.g. using different manufacturing techniques.

The peripheral part may further have a first flange projecting partly or fully towards the central part. The central part may have a corresponding second flange projecting partly or fully towards the peripheral part. The first and second flanges are configured to be attached together, e.g. using adhesive, bolts and nuts, rivets or screws. This allows the additional components to be mounted to the central part before attaching the peripheral part. Alternatively, the additional components may be mounted after the central and peripheral parts been attached.

The central part may be formed by the frame structure, wherein the ends of the frame elements may be attached to the peripheral part. The frame structure may alternatively comprise a continuous disc-shaped element or a plurality of sub-elements which together form the disc element. Optionally, a plurality of support elements, e.g. ribs, may be integrated into the frame structure for added support. This disc element may function as a mounting plate for the additional components.

According to one embodiment, said frame structure is contacting or spaced apart from the first or second side surface, wherein the frame structure is attached to at least the at least one peripheral flange or a central part of the bulkhead element.

The frame structure may contact the first or second side surface and thus extend along that side surface. The frame structure may in this configuration be attached directly to the bulkhead element, e.g. the central part thereof. The frame structure may further extend partly or fully along the peripheral flange in the longitudinal direction. This allows for an easy and simple attachment of the frame structure. This also distributes the loads and stresses over a greater contact area.

Alternatively, the frame structure may be spaced apart from the first or second side surface. The frame structure may in this configuration be attached directly to the peripheral flange of the bulkhead element. Alternatively or additionally, the frame structure may be attached indirectly to the central part and/or the additional components via intermediate frame elements. This increases the flexibility when positioning the respective components and allows the respective components to be moved towards the blade root. This also allows for a simplified cable routing and reduced dimensions of the respective inlet and outlet openings. This may in some instances allow for a simplified manufacture of the bulkhead element.

According to one embodiment, the frame structure is positioned on one side of the bulkhead element and at least one of said additional components is positioned on the opposite side of the bulkhead element.

The frame structure may be arranged on a first side of the bulkhead element, e.g. the side facing the tip end, while one or more of the additional components may be arranged on an opposite second side, e.g. the side facing the blade root. For example, a heater unit, a blower unit, an electrical cabinet or a control box may be arranged on the second side and attached to the frame structure located on the first side, e.g. using bushings and/or extended bolts. This increases the usable area for attachment of the additional components. This also provides easy access to any components that requires regular servicing or inspection without entering the interior of the wind turbine blade.

Any components that do not require regular servicing or inspection may further be arranged on the second side, or alternatively on the first side along with the frame structure.

In one embodiment, said bulkhead element comprises at least one thick portion having a first thickness and at least one thin portion having a second thickness, wherein said first thickness is greater than the second thickness.

The bulkhead element may be configured to have sufficient structural strength so that it may further function as a working platform for the worker without causing any structural damage. The bulkhead element may have a sandwich structure, a laminate structure, a hollow structure or a solid structure.
For example, the central part and/or the peripheral part may comprise a core material sandwiched between a first set of layers of a fibre material and a second set of layers of the fibre material. The core material may be balsa, foam or another closed or open celled material. For example, the core material may be a polymer material, e.g. polyurethane. The fibre material may be made of carbon, glass, aramid or basalt. The layers of fibre material may be impregnated with a resin and then cured. The resin may be epoxy, vinylester, polyester or polyurethane. The core material may alternatively be omitted to form a laminate structure which is impregnated with the resin and then cured.

For example, the central part and/or the peripheral part may have a solid structure formed by a suitable material, such as metal, e.g. steel, or have a hollow structure formed by a suitable plastic material, such as polyethylene, polyvinyl chloride, nylon, polypropylene or polyester.

The bulkhead element, e.g. the central part, may have a constant thickness over the entire side surface area. This allows for a simplified manufacture of the bulkhead element and provides a relative uniform structural strength.

The bulkhead element, e.g. the central part, may further have contact areas dedicated for attachment of the frame structure. These contact areas may have a profile corresponding to the profile of the individual frame elements of the frame structure. These contact areas may divide the surface area into the individual enclosed areas and open ended areas described earlier. The bulkhead element may in these contact areas form a number of thin portions having a reduced local thickness. The open ended areas and/or the enclosed areas may thus form a number of thick portions having a maximum local thickness.

For example, the open ended areas and/or the enclosed areas may have a sandwich structure, as described earlier, or an increased number of laminate layers or an increased material thickness. The core material may be omitted in the contact areas so that the first and second sets of layers of fibre material form a combined laminate. Alternatively, the number of laminate layers or the material thickness may be reduced in these contact areas. This saves weight and material of the bulkhead element. This also reduces the risk of the core material creeping or fracturing during mounting or operation. According to one embodiment, the frame structure is made of a substantially rigid material or composite.

The frame structure may be made of a different material or composite than the bulkhead element. The frame structure, e.g. the frame elements, may be made of a substantially rigid material, such as metal, e.g. steel or aluminium.

The frame structure may alternatively be made of a substantially rigid composite, such as a thermoplastic material. The thermoplastic material may comprise fibres made of carbon, glass, aramid or basalt. The fibre material may be impregnated with a resin and then cured. The resin may be epoxy, vinylester, polyester or polyurethane.

Alternatively, the frame structure and the bulkhead element may be made of the same material or composite. For example, the frame structure and the bulkhead element may be made of a thermosetting plastic material or composite, e.g. FRP.

One object of the invention is also achieved by a wind turbine blade as defined in claim 8.

This provides a wind turbine blade with a bulkhead unit that allows for the installation of various systems with increased operating capacities. The increased stresses and loads introduced by the components of these systems are absorbed by the frame structure and then transferred to the blade shell via the attachment points. This eliminates the need for increasing the thickness of the bulkhead element or mounting reinforcing elements around the openings. This saves material and weight of the bulkhead element where the frame structure also provides support for the bulkhead element.

The wind turbine blade has a total relative length of 1 measured between the blade root and the tip end. The bulkhead unit may be arranged at the blade root or at a relative distance of up to 0.2 from the blade root. Once installed, the bulkhead unit substantially seals off the interior of the wind turbine blade.
According to one embodiment, at least one heater or blower unit forming part of a de-icing system is arranged within the wind turbine blade, wherein said at least one heater or blower unit is mounted to the frame structure of the bulkhead unit.
In example, a de-icing system may be integrated into the wind turbine blade for removing accumulated ice and/or preventing the formation of ice on the blade surface. The de-icing system may comprise one or more sets of tubing arranged inside the wind turbine blade. The tubes may form at least one fluid path for guiding air towards the tip end and at least one other fluid path for guiding air towards the blade root. The fluid paths may alternatively be formed by one or more sets of chambers internally formed by the blade shell, the shear web(s) and/or additional shear webs or intermediate walls. The tubing or chambers together forms an air guidance system for circulating air within at least a part of wind turbine blade. Further details of the air guidance system will not be described as they are known to the skilled person.

A first coupling element may be connected to the frame structure and/or the air guidance system for guiding air into the wind turbine blade via a corresponding inlet opening in the bulkhead element. Additionally or alternatively, a second coupling element may be connected to the frame structure and/or the air guidance system for guiding air out of the wind turbine blade via a corresponding outlet opening in the bulkhead element. For example, the coupling element may be a flexible tube section or an adapter piece for coupling to an adjacent tube section or internal chamber. This allows air to be guided through the bulkhead element.

The heater unit and the blower unit may be separate units coupled directly together or in fluid communication with each other via the air guidance system. Alternatively, the heater and blower units may be integrated into a combined unit. Stresses and loads introduced by these components may be absorbed by the frame structure and transferred to the blade shell via the attachment points.

The heating unit and/or the blower unit may be formed by a single unit configured to deliver a required capacity. Alternatively, the heating unit and/or the blower unit may formed by two or more sub-units which together are capable of delivering the required capacity. The heating unit and/or the blower unit may be mounted to a mounting plate formed by the frame structure, as described earlier. This simplifies the mounting process as no separate mounting plate is needed. Optionally, the size of the heating unit and/or the blower unit may be increased to distribute the stresses and loads over a greater surface area.

The de-icing system may further comprise means for re-circulating at least part of the returning air and/or comprise heat exchanging means for re-using the energy in the returning air to heat up the incoming air. This reduces the amount of energy required to operate the de-icing system.

According to a special embodiment, said at least one heater or blower unit and the frame structure are positioned on opposite sides or on the same side of the bulkhead element. The heater unit and/or the blower unit may be positioned on the same side as the frame structure. This allows the respective units to be mounted directly to the frame structure. For example, the frame structure and the heater and/or blower unit may face the blade root for providing easy access to the individual units. This configuration also allows the size of the respective inlet and outlet openings to be reduced. For example, the frame structure and the heater and/or blower unit may face the tip end for providing a more compact de-icing system. In this configuration, the inlet and outlet openings in the bulkhead element may be omitted.

The heater unit and/or the blower unit may be positioned on the opposite side in relation to the frame structure. The respective units may thus contact the bulkhead elements directly and be mounted to the frame structure through the bulkhead element. This increases the usable areas for mounting of the respective units.

Alternatively, the heater unit and/or the blower unit of the de-icing system may be situated outside the wind turbine blade, e.g. in the hub or the nacelle, and connected to the air guidance system located inside the wind turbine blade via the coupling elements. In this configuration, the individual coupling elements may extend through the bulkhead element. Alternatively, separate coupling elements may be arranged on opposite sides of the bulkhead element and in fluid communication with each other via the same inlet or outlet opening. This saves weight and reduces the total installation time.

According to one embodiment, further additional components are mounted to the frame structure, wherein said further additional components form part of at least one further system.

Components of additional systems, such as a lightning protection system, a measuring system, a control system or a lighting system, may further be mounted to the frame structure. External electrical cables, data cables and/or optical fibre cables may extend through one or more dedicated openings in the bulkhead element. The individual cables may be coupled to these components and further to various sensors, lightning receptors, lighting units and other items arranged on or in the wind turbine blade.

One object of the invention is further achieved by a method of assembling a bulkhead unit as defined in claim 12.

This allows the bulkhead unit to be manufactured and assembled separate from the wind turbine blade. The bulkhead element may be manufactured under controlled conditions and then fitted with the frame structure and additional components before installation. This allows for a faster and easier mounting process as the workers are not restricted by the limited space within the wind turbine blade. This also allows the various components to be lifted into position and installed relative to the frame structure or the bulkhead element more safely compared to conventional installation methods.

The bulkhead element may be formed as a single piece or by a plurality of sub-pieces that are joined together to form the bulkhead element. The bulkhead element, or sub-pieces thereof, may be manufactured in one or more moulds using any known manufacturing techniques. For example, a number of first layers of a fibre material may be laid up in a bulkhead mould, a core material may then be arranged on these first layers, and finally a number of first layers of a fibre material may be laid up over the core material. A resin may then be introduced into this sandwich structure and cured. The external surfaces and edges of the cured element may be finished to form the bulkhead element. Alternatively, the core material may be injected between the first and second layers after lay-up of these layers.

The individual frame elements may be manufactured using any known manufacturing techniques and then joined together. For example, the frame elements may be formed using pultrusion or extrusion and then finished into the desired shape. The individual frame elements may afterwards be joined together, e.g. using welding, adhesive, bolts, rivets or the like.

The frame structure is positioned on one side of the bulkhead element and then suitably attached to the bulkhead element. For example, the frame structure may face the blade root or the tip end dependent on the desired orientation. The frame structure may be attached using adhesive, bolts, rivets, screws, clamps or the like.

Additional components, such as electrical cabinets, heater units, blower units, etc., may afterwards be mounted on the frame structure. These additional components may be arranged relative to dedicated openings in the bulkhead elements. A hatch or cover may further be mounted relative to the access opening or the drainage opening. The remaining components of these systems can be installed within the wind turbine blade before the installation of the bulkhead unit. Once the bulkhead unit is installed, the components on the bulkhead unit may simply be coupled to the already installed components. Alternatively, the remaining components of these systems can be installed within the wind turbine blade after the installation of the bulkhead unit. This simplifies and reduces the installation time of these systems.

According to one embodiment, the method further comprises at least one of the following steps:
- forming at least one opening in the bulkhead element prior to positioning the supporting frame structure, wherein said positioning of the supporting frame structure further comprises aligning the supporting frame structure relative to said at least one opening,
- forming at least one opening in the bulkhead element after said attaching of the supporting frame structure.

Prior to attachment of the frame structure, one or more openings may be cut into the bulkhead element at predetermined positions. The inner dimensions and profile thereof may be adapted according to the intended use. The openings may be formed using any known cutting process. The openings may thus be formed post-manufacturing thereby reducing the manufacturing time.

Alternatively, the openings may be integrally formed in the bulkhead element during manufacture. For example, the respective openings may be formed by arranged one or more positive mould pieces on the moulding surface. The positive mould pieces may be separate items that are positioned on the mould surface or integrated items that project from the mould surface. The material or composite of the bulkhead element may then be arranged around these positive mould pieces to form the bulkhead element. This may in some instances increase the complexity and manufacturing time.

The openings may alternatively be formed in the bulkhead element after the attachment of the frame structure. The enclosed areas and/or the open ended areas may optionally be used as references during the cutting process.

One object of the invention is additionally achieved by a method of installing a bulkhead unit in a wind turbine blade as defined in claim 14.

This provides a simple and easy method for installing the bulkhead inside the wind turbine blade as the bulkhead can be provided as a pre-assembled unit. This simplifies the installation process and reduces the total installation time even when the additional components become larger and heavier. Furthermore, the cutting process can be performed under more controlled conditions and waste material can be removed more easily. Conventional methods require the bulkhead element to be positioned and installed inside the wind turbine before any components can be mounted to the bulkhead element. The openings are then cut into the bulkhead element after installation which increases the risk of waste materials being trapped inside the wind turbine blade after installation. According to one embodiment, the method further comprises mounting a lifting device to said bulkhead unit via first mounting means and coupling said lifting device to an external lifting unit, wherein the bulkhead unit is lifted into an installation position relative to the blade root using said external lifting unit.

One or more lifting devices may be mounted to the pre-assembled bulkhead unit, e.g. the frame structure using first mounting means. The lifting device may be mounted using fasteners like bolts, screws, clamps or the like. The lifting device may be mounted directly to the frame structure, if the frame structure is facing the blade root. The lifting device may alternatively be arranged on the opposite side of the bulkhead element and mounted to the frame structure through the bulkhead element, if the frame structure is facing the tip end. The lifting device may optionally extend through an opening in the bulkhead element. This allows the bulkhead to be lifted into position relative to the wind turbine blade.

Once the lifting device has been mounted, the bulkhead unit may be lifted into position relative to the blade root using an external lifting unit. The lifting device may be coupled to the lifting unit prior to the lifting process, e.g. using slings or wires. For example, the lifting unit may be a crane unit, a hoisting system, a mobile forklift or another type of lifting unit. The lifting unit may thus be used to move the bulkhead unit into position within the blade root portion.

Once the bulkhead unit has been attached to the blade shell, the lifting device is demounted and removed. The lifting device may thus be reused to install another bulkhead unit within another wind turbine blade.

According to a special embodiment, the lifting device further comprises second mounting means, wherein the bulkhead unit is fixed in said installation position by connecting said second mounting means to the wind turbine blade.

When the bulkhead unit have been moved into its installation position relative to the blade shell, the lifting device and thus the bulkhead unit may be fixed relative to the blade shell prior to attachment.

The lifting device may comprise one or more second mounting means for connecting the lifting device to the wind turbine blade. For example, the second mounting means may be formed as a mounting bracket dedicated for mounting to the blade root. For example, the mounting bracket may comprise one or more holes for alignment with corresponding holes in the blade root. Fasteners, e.g. bolts, may be inserted into said holes and corresponding holes for mounting of the lifting device. Other types of fastening elements may also be used, such as clamps or latches. This allows the lifting device and thus the bulkhead unit to be fixed relative to the blade shell. This allows for an improved attachment process as the bulkhead unit is prevented from moving relative to the blade shell during the attachment.

After the bulkhead unit has been fixed, the lifting unit may be decoupled from the lifting device. This allows the lifting unit to be used for other tasks during the attachment process.

According to another special embodiment, said bulkhead unit is rotated into alignment relative to the blade root before being moved into the installation position.

The bulkhead unit may be placed in an initial position prior to performing the lifting process. The bulkhead unit may then be rotated into alignment with the position of the blade root before being moved into the installation position. This may be achieved by adjusting the length of the respective slings or wires coupled to the lifting device during the lifting process. This may also be achieved by adjusting the lifting point(s) on the lifting device. This may alternatively be achieved by adding or removing balancing weights from the lifting device.

Alternatively, the bulkhead unit may be assembled using a supporting structure configured to received and hold at least the bulkhead element. Before lifting the bulkhead unit, it may be rotated into a lifting position corresponding to the position of the blade root. This may be achieved using integrated turning means, e.g. actuators, on the supporting structure or the lifting unit, wherein the bulkhead unit is rotated about a pivot point. This allows the bulkhead unit to be rotated into alignment with the position of the blade root before being moved into the installation position.

Once the bulkhead unit has been aligned correctly relative to the blade root, then the bulkhead unit may be finally be moved in the longitudinal direction for placing the bulkhead unit in the installation position.

One aspect of the disclosure relates to a lifting device for installing a bulkhead unit as described above, wherein the lifting device comprises first mounting means configured to be mounted to the frame structure of said bulkhead unit and at least one lifting point for coupling to an external lifting unit, wherein said lifting device further comprises second mounting means configured to be connected to the wind turbine blade for fixing the bulkhead unit in the installation position.

The lifting device may have a substantially U-shaped or L-shaped body where at least one leg of this body extends freely out of the blade root end, when mounted, allowing the lifting device to be coupled to the lifting unit. Alternatively, at least one leg of this body extends into the blade root portion, when mounted, allowing the lifting device to be mounted to the frame structure.

The lifting device may comprise one or more lifting means suitable configured to be coupling to the lifting unit. For example, the lifting means may be lifting hooks, lifting lugs or female coupling elements. The lifting unit may comprise matching lifting lugs, lifting hooks or male coupling elements. The lifting means may define one or more lifting points for lifting the lifting device into position prior to mounting and/or lifting the lifting device after mounting to the frame structure.

Optionally, the lifting means may be adjustable so that the lifting point can be adjusted to perform a balanced lift. For example, the lifting means may be formed as an elongated opening with a row of recesses each defining a selected lifting point. For example, the lifting means may be formed as a row of lifting hooks or lugs each defining a selected lifting point. For example, the lifting hook or lug may be connected to an adjustable mechanism, e.g. a slidable bar or rail, which can be adjusted to change the lifting point.

The lifting device may comprise suitable first mounting means arranged on one leg for mounting to the frame structure, such as a mounting bracket or plate. The lifting device may further comprise suitable second mounting means arranged on another leg for mounting to the wind turbine blade, such as the blade root. For example, the second mounting means may be another mounting bracket or plate. This mounting plate or bracket may comprise one, two or more holes for receiving separate mounting bolts. The holes may be aligned with corresponding holes in the blade root end and the bolts may be inserted into these aligned holes for mounting the lifting device. Other types of fastening elements may be used to affix the lifting device to the wind turbine blade.

Alternatively, the lifting device may comprise a mounting plate or holding structure configured to receive and hold a number of balancing weight elements. The number of balancing weight elements located on the lifting device may be varied in order to perform a balanced lift.

### Description of drawings

The invention is explained in detail below with reference to embodiments shown in the drawings, in which
- Fig. 1: shows a wind turbine,
- Fig. 2: shows an exemplary embodiment of the wind turbine blade,
- Fig. 3: shows the wind turbine blade with a bulkhead unit connected to a de-icing system,
- Fig. 4: shows an exploded view of a first embodiment of the bulkhead unit,
- Fig. 5: shows a cross-sectional view of the bulkhead unit of fig. 4,
- Fig. 6: shows the bulkhead unit of fig. 4 seem from the trailing edge,
- Fig. 7a-c: show three alternative embodiments of the bulkhead element,
- Fig. 8: shows a second embodiment of the frame structure,
- Fig. 9: shows the bulkhead element with a third embodiment of the frame structure,
- Fig. 10a-b: show the bulkhead element with a fourth embodiment of the frame structure,
- Fig. 11a-b: shows a fifth embodiment of the bulkhead element and of the frame structure,
- Fig. 12: shows an exemplary embodiment of the frame structure with projecting support elements,
- Fig. 13: shows an exemplary embodiment of a lifting device, and
- Fig. 14: shows the bulkhead unit with the lifting device of fig. 13 positioned in the installation position.

### List of references

- 1.: Wind turbine
- 2.: Wind turbine tower
- 3.: Nacelle
- 4.: Hub
- 5.: Wind turbine blades
- 6.: Pitch bearing
- 7.: Blade root
- 8.: Tip end
- 9.: Leading edge
- 10.: Trailing edge
- 11.: Blade shell
- 12.: Pressure side
- 13.: Suction side
- 14.: Blade root portion
- 15.: Aerodynamic blade portion
- 16.: Transition portion
- 17.: Length of wind turbine blade
- 18.: Chord length of wind turbine blade
- 19.: Bulkhead unit
- 20.: Heater unit
- 21.: Blower unit
- 22.: Air guidance system
- 22a-b.: Tubes
- 23.: Coupling elements
- 24a-b.: Shear webs
- 25.: Frame structure
- 26.: Bulkhead element
- 27.: Access opening
- 28.: Inlet opening
- 29.: Outlet opening
- 30.: Mounting plate
- 31.: Peripheral flange
- 32.: Outer edge surface
- 33.: Inner edge surface
- 34.: Thick portions
- 35.: Thin portions
- 36.: Outer blade surface
- 37.: Inner blade surface
- 38.: First side of frame structure
- 39.: Second side of frame structure
- 40.: Ends of frame elements
- 41.: First side of bulkhead element
- 42.: Second side of bulkhead element
- 43.: Central part
- 44.: Peripheral part
- 45.: Mounting flanges
- 46.: Enclosed areas
- 47.: Main frame elements
- 48.: Secondary frame elements
- 49.: Outer frame element
- 50.: Frame structure
- 51.: First opening
- 52.: Second opening
- 53.: Bulkhead unit
- 54.: Bulkhead element
- 55.: Frame structure
- 56.: First flange
- 57.: Second flange
- 58.: Support elements
- 59.: Lifting device
- 60.: First mounting means
- 61.: Second mounting means
- 62.: Lifting lug
- 63.: Adjustable mechanism
- 64.: Holes in blade root end
- 65.: Fasteners

The listed reference numbers are shown in abovementioned drawings where not all reference numbers are shown on the same figure for illustrative purposes. The same part or position seen in the drawings will be numbered with the same reference number in different figures.

### Detailed description of the drawings

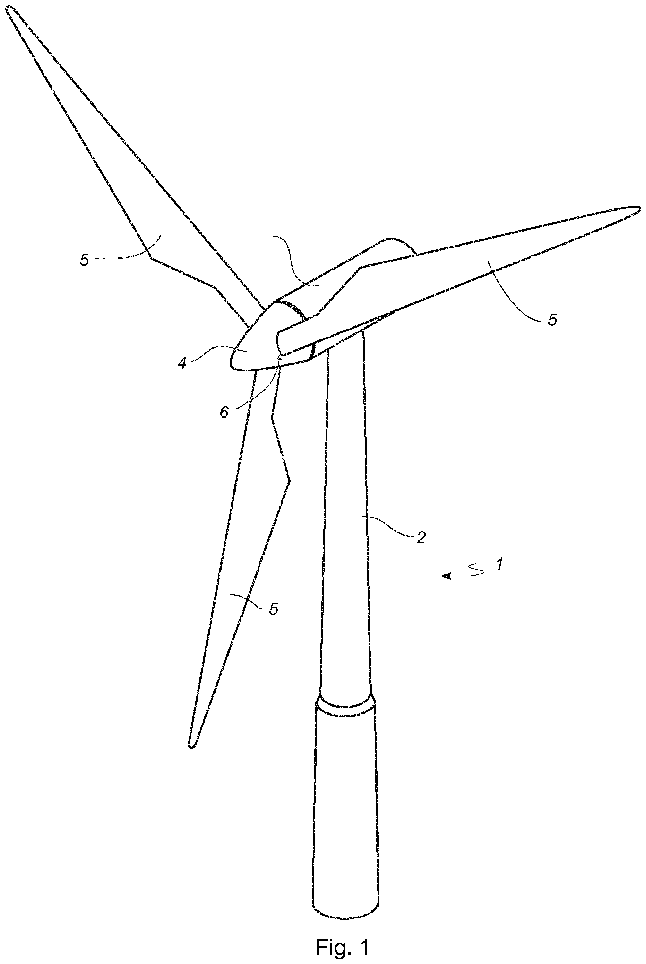

Fig. 1 shows a modern wind turbine 1 comprising a wind turbine tower 2, a nacelle 3 arranged on top of the wind turbine tower 2, and a rotor defining a rotor plane. The nacelle 3 is connected to the wind turbine tower 2, e.g. via a yaw bearing unit. The rotor comprises a hub 4 and a number of wind turbine blades 5. Here three wind turbine blades are shown, but the rotor may comprise more or fewer wind turbine blades 5. The hub 4 is connected to a drive train, e.g. a generator, located in the wind turbine 1 via a rotation shaft.

The hub 4 comprises a mounting interface for each wind turbine blade 5. A pitch bearing unit 6 is optionally connected to this mounting interface and further to a blade root of the wind turbine blade 5.

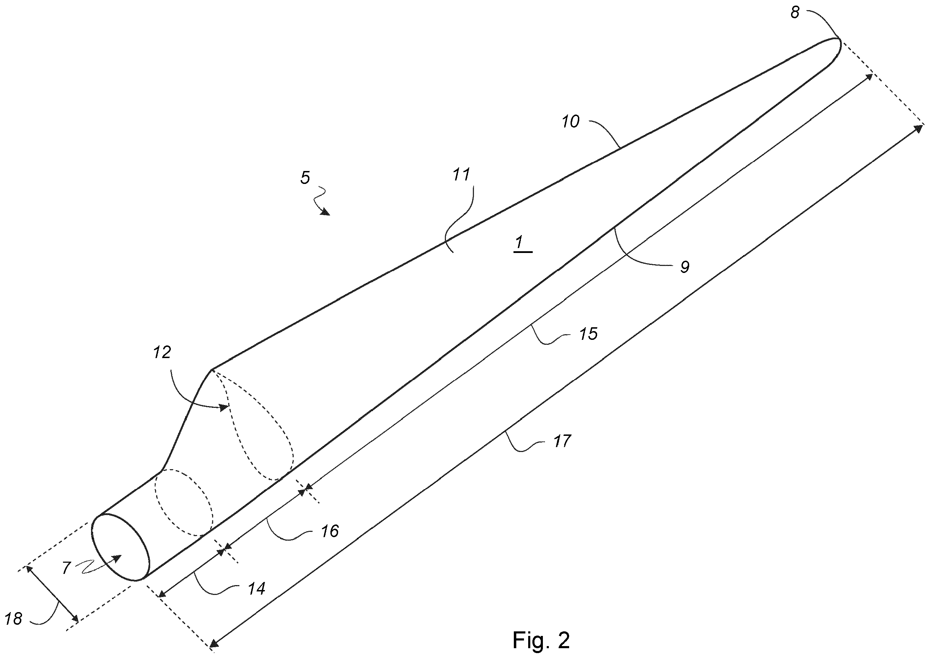

Fig. 2 shows a schematic view of the wind turbine blade 5 which extends in a longitudinal direction from a blade root 7 to a tip end 8. The wind turbine blade 5 further extends in a chordwise direction from a leading edge 9 to a trailing edge 10. The wind turbine blade 5 comprises a blade shell 11 having two opposite facing side surfaces defining a pressure side 12 and a suction side 13 respectively. The blade shell 11 further defines a blade root portion 14, an aerodynamic blade portion 15, and a transition portion 16 between the blade root portion 14 and the aerodynamic blade portion 15.

The blade root portion 14 has a substantially circular or elliptical cross-section (indicated by dashed lines). The blade root portion 14 together with a load carrying structure, e.g. a main laminate combined with a shear web or a box beam, are configured to add structural strength to the wind turbine blade 5 and transfer the dynamic loads to the hub 4. The load carrying structure extends between the pressure side 12 and the suction side 13 and further in the longitudinal direction.

The aerodynamic blade portion 15 has an aerodynamically shaped cross-section (indicated by dashed lines) designed to generate lift. The cross-sectional profile of the blade shell 11 gradually transforms from the circular or elliptical profile into the aerodynamic profile in the transition portion 16.

The wind turbine blade 5 has a longitudinal length 17 of at least 35 metres, preferably at least 50 metres. The wind turbine blade 5 further has a chord length 18 as function of the length 17, wherein the maximum chord length is found between the blade aerodynamic blade portion 15 and the transition portion 16. The wind turbine blade 5 further has a blade thickness 19 as function of the chord length 18, wherein the blade thickness 19 is measured between the pressure side 12 and the suction side 13.

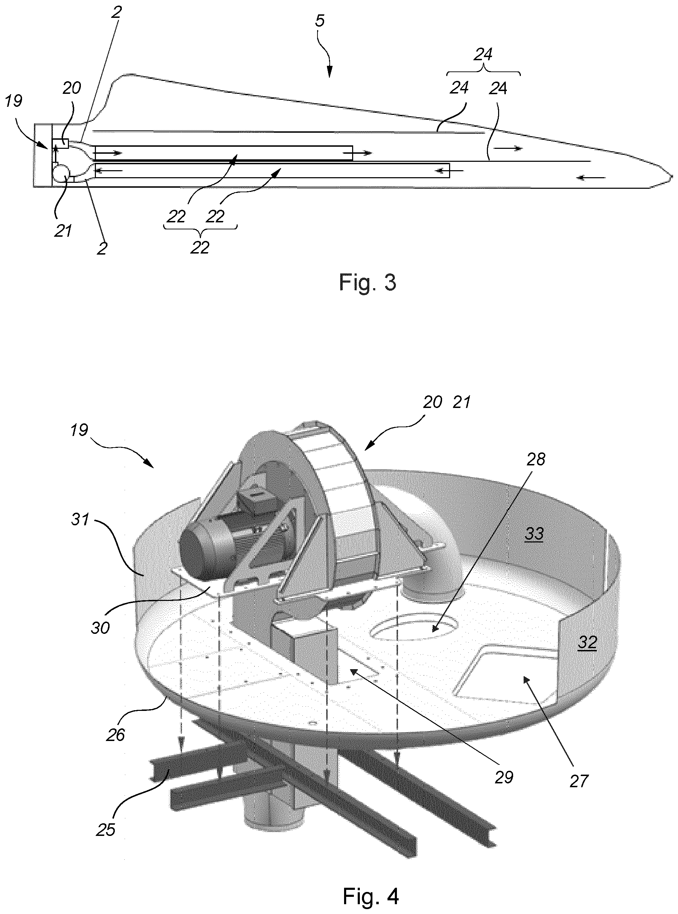

Fig. 3 shows the wind turbine blade 5 with a bulkhead unit 19 connected to a de-icing system. The bulkhead unit 19 is arranged in the blade root portion 14 at a predetermined distance from the blade root 7. The bulkhead unit 19 comprises a bulkhead element (shown in fig. 4) and a frame structure (shown in fig. 4).

The de-icing system comprises a heater unit 20 in fluid communication with a separate blower unit 21. The heater unit 20 is configured to heat up the incoming air being guided into an air guidance system 22 via the blower unit 21. The blower unit 21 is configured to suck the returning air out of the air guidance system 22 and into the heater unit 20. The heating unit 20 and the blower unit 21 are each mounted to the frame structure which provides support for these units.

The heater and blower units 20, 21 are further in fluid communication with the air guidance system 22 via suitable inlet and outlet elements 23. The inlet and outlet elements 23 are here formed as flexible tube sections. The air guidance system 22 here comprises a first fluid path formed by one set of tubes 22a and a second fluid path formed by another set of tubes 22b. The sets of tubes 22a, 22b are in fluid communication with each other for circulating air inside the wind turbine blade 5.

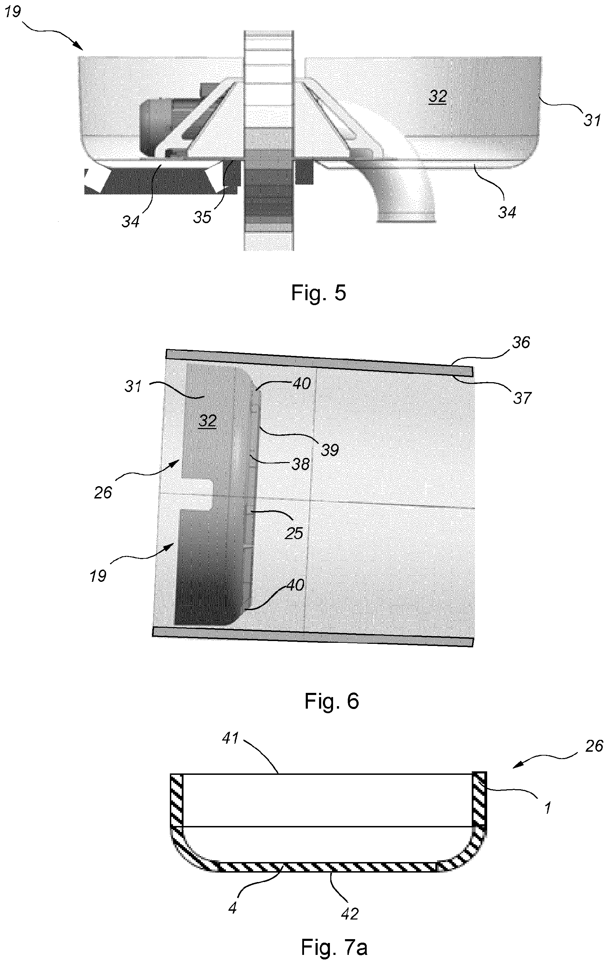

The air guidance system 22 is attached to the load carrying structure of the wind turbine blade 5. Here, the load carrying structure comprises two shear webs 24a, 24b extending in the longitudinal direction. The blade shell 11 has an inner blade surface and an outer blade surface as indicated in fig. 5, wherein the shear webs 24 project inwards from the opposite facing inner surfaces.

Fig. 4 shows an exploded view of a first embodiment of the bulkhead unit 19. As indicated, the bulkhead element 26 comprises a plurality of openings arranged in the side surface adapted for a particular purpose. The bulkhead element 26 is here arranged with an access opening 27, an inlet opening 28, an outlet opening 29. The bulkhead element 26 further comprises an opening for guiding electrical cables, data cables or optical fibre cables through the bulkhead unit 19.

Here, the heater and blower units 20, 21 are formed as an integrated unit extending through the inlet and outlet openings 28, 29 as illustrated in fig. 5. The heater and blower units 20, 21 are arranged on the opposite side of the bulkhead element 26 in relation to the frame structure 25. A separate mounting plate 30 is used to mount this integrated unit to the frame structure 25.

The bulkhead element 26 here has a U-shaped profile comprising a peripheral flange 31 projecting from a central part of the bulkhead element 26. The peripheral flange 31 defining a first peripheral edge with an outer edge surface 32 and an inner edge surface 33.

The frame elements of the frame structure 25 divides the surface areas of the bulkhead element 26 into a plurality of open ended areas, as illustrated in fig. 4.

Fig. 5 shows a cross-sectional view of the bulkhead unit 19 with the frame structure 25 omitted for illustrative purposes. The central part of the bulkhead element 26 has a plurality of thick portions 34 and a plurality of thin portions 35 arranged relative to each other. The thin portions 35 defines contact areas dedicated for mounting of the frame structure 25 as indicated in fig. 4.

The bulkhead unit 19 is arranged within the blade root portion of the wind turbine blade 5. Here, the bulkhead unit 19 is placed at a distance from the blade root 7. The heater and blower units 20, 21 are omitted for illustrative purposes.

The blade shell 11 has an outer blade surface 36 and an inner blade surface 37. The bulkhead element 26 is bonded to the blade shell 11 via an adhesive layer (not shown) arranged between the outer edge surface 32 and the inner blade surface 37.

The frame structure 25 has a first side 38 facing the blade root 7 and a second side 39 facing the tip end 8. The frame structure 25 has a second peripheral edge comprising an end 40 having a tapered profile. The end 40 tapers from the first side 38 to the second side 39.

As indicated in fig. 6, the second peripheral edge is retracted relative to the first peripheral edge. This means that the frame structure 25 has an outer diameter that is smaller than the outer diameter of the bulkhead element 26.

Fig. 7a-c show three alternate embodiments of the bulkhead element 26, where the bulkhead element 26, 26', 26" has a first side 41 and a second side 42.

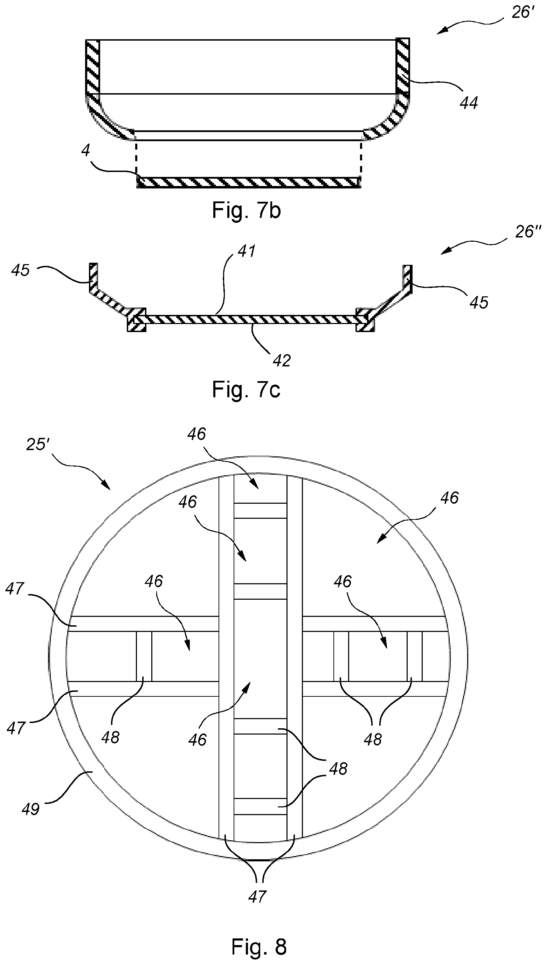

In fig. 7a, the bulkhead element 26 has a continuous U-shaped profile defining an integrated central part 43 from which the peripheral flange 31 projects in the longitudinal direction. In fig. 7b, the bulkhead element 26' has a peripheral part 44 and a separate central part 43' configured to be attached to the peripheral part 44. In fig. 7c, the bulkhead element 26" has a plate-shaped profile which is connected to a number of mounting means, e.g. mounting bracket 45. The mounting brackets 45 may be made of a flexible material or have a flexible structure to allow deformation.

Fig. 8 shows a second embodiment of the frame structure 25' seem from the second side 39. The frame structure 25' comprises a number of individual frame elements interconnected to form a plurality of enclosed areas 46. The inner dimensions of the areas 46 are adapted to the inner dimensions of the openings 27, 28, 29 in the bulkhead element 26.

The frame structure 25' comprises two sets of main frame elements 47 extending in different directions. The individual main frame elements 47 are interconnected via two sets of secondary frame elements 48. The individual main frame elements 47 are further connected to an outer frame element 49 extending along the circumference.

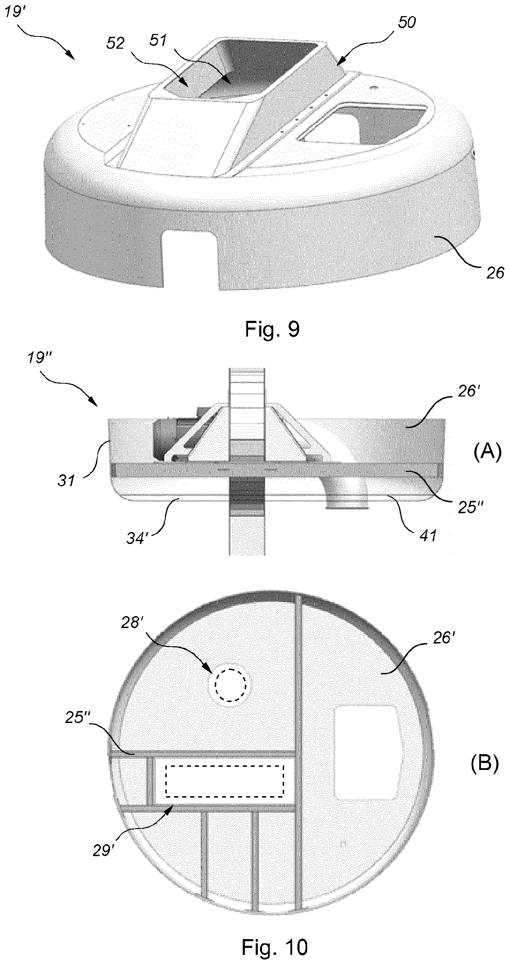

Fig. 9 shows another embodiment of the bulkhead unit 19' with a third embodiment of the frame structure 50 attached to the bulkhead element 26. The additional components are here omitted for illustrative purposes.

The frame structure 50 comprises a funnel-shaped frame element having a first opening 51 and a second opening 52. The first opening 51 is facing a corresponding opening in the bulkhead element 26. The second opening 52 is facing away from the bulkhead element 26. The sides of the frame elements project outsides from the second side 42 or, alternatively, the first side 41 of the bulkhead element 26.

The frame element comprises flanges arranged at the first opening 51 for attachment to the bulkhead element 26, e.g. using adhesive or bolts. An additional component, e.g. the heater and blower unit 20, 21, is arranged relative to and attached to the frame element, e.g. extending through the first opening 51 and/or the second opening 52.

Fig. 10a-b show another configuration of the bulkhead unit 19" where a fourth embodiment of the frame structure 25" is attached to the bulkhead element 26. Here, the additional components have been omitted from fig. 10b for illustrative purposes.

The frame structure 25" is spaced apart from the first side 41 of the central part of the bulkhead element 26, as illustrated in fig. 10a. The frame structure 25" is in this configuration attached to the peripheral flange 31 of the bulkhead element 26. The heater and blower units 20, 21 are thereby positioned at a distance from the central part, allowing cables, tubes and the like to be routed between the frame structure 25" and the central part.

In this configuration, the sizes of the respective openings 28', 29' have a reduced size (indicated by dashed lines) in relation to the same openings 28, 29 illustrated in fig. 4. Thereby, the respective openings 28', 29' have a size smaller than the size of the enclosed areas formed by the frame structure 25", as illustrated in fig. 10b. The opening 29 in the configuration shown in fig. 4 may have a size substantially equal to the size of the enclosed areas formed by the frame structure 25", as illustrated in fig. 10b.

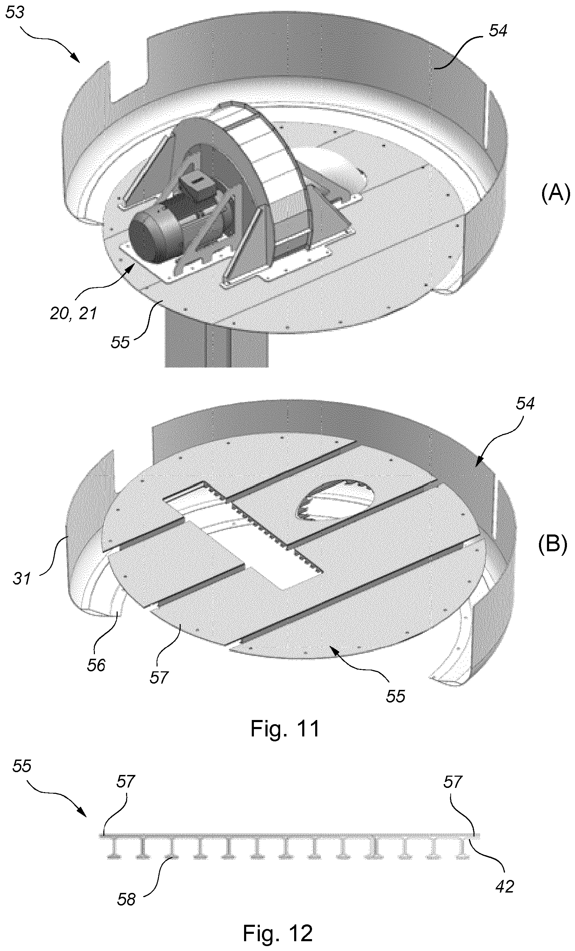

Fig. 11a-b show an alternative embodiment of the bulkhead unit 53 with a fifth embodiment of the bulkhead element 54 and of the frame structure 55. Here, the additional components have been omitted from fig. 11b for illustrative purposes.

The central part of the bulkhead element 54 is in this embodiment formed by the frame structure 55, as illustrated in fig. 11a. The bulkhead element 54 is formed as a peripheral part comprising the peripheral flange 31 and a first flange 56 facing in the radial direction. The first flange 56 is configured to be attached a second flange 57 on the frame structure 55.

The frame structure 55 has an overall disc-shaped profile, wherein a plurality of individual sub-elements is joined together to form the disc-shaped frame element, as illustrated in fig. 11b.

Fig. 12 shows an exemplary embodiment of the frame structure 50 with a plurality of support elements 58 projecting from the second side 42. The support elements 58 are here shaped as ribs extending in the length direction of the individual sub-elements, as illustrated in fig. 11b.

The support elements 58 are integrated into the frame structure 55, e.g. into each subelement. The support elements 58 are spaced apart evenly over the second side 42.

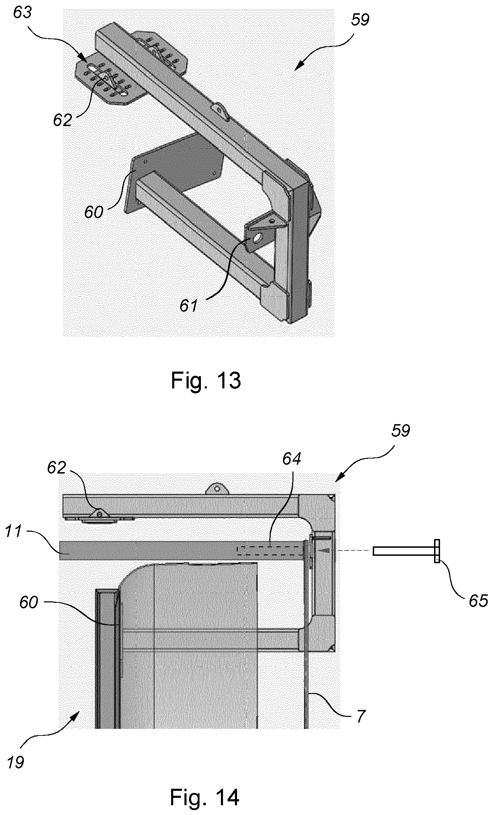

Fig. 13 shows an exemplary embodiment of a lifting device 59 for use during installation of the bulkhead unit 19, 53. The lifting device 59 comprises a U-shaped body with first mounting means 60 in form of a mounting bracket configured to be mounted to the frame structure 25, 25', 25", 50, 55.

The lifting device 59 further comprises second mounting means 61 in the form of another mounting bracket configured to be mounted to the blade root 7 end of the wind turbine blade, as illustrated in fig. 14.

The lifting device 59 comprises an adjustable lifting lug structure defining a lifting point for coupling to a lifting unit. The lifting lug 62 is connected to an adjustable mechanism 63 attached to the body, allowing the lifting point to be adjusted.

Fig. 14 shows the bulkhead unit 15, 53 with the lifting device 59 positioned in the installation position. Here, the lifting unit and the additional components are omitted for illustrative purposes. Further, parts of the blade shell 11 are omitted for illustrative purposes.

Prior to lifting the bulkhead unit 19, the lifting device 59 is positioned relative to the frame structure 25, 25', 25" and the first mounting means 60 is fastened to the frame structure 25, 25', 25". The lifting unit is then coupled to the lifting lug 62.

The pre-assembled bulkhead unit 19 is lifting into alignment relative to the orientation of the blade root 7. Optionally, the bulkhead unit 19 is rotated during the lifting process so that it is aligned with the blade root 7. The bulkhead unit 19 is further lifted into the blade root portion 14 and placed into the installation position, as illustrated in fig. 14.

Holes (shown in fig. 13) on the second mounting means 61 are afterwards aligned with corresponding holes 64 in the blade root 7 end. Fasteners 65 in the form of bolts are inserted into the aligned holes for mounting the lifting device 59 to the blade root 7, thereby fixing the bulkhead unit 19 relative to the blade shell 11.

The bulkhead unit 19 is afterwards attached to the blade shell 11. Once the attachment process is completed, the fasteners 65 are removed and the first mounting means 60 is demounted. The lifting device 59 is then removed from the wind turbine blade 5.

## Claims

1. A bulkhead unit (19) for a wind turbine blade (5), the wind turbine blade (5) comprising a blade shell (11) defining a blade root portion (14) having an inner blade surface (37), wherein the bulkhead unit (19) comprises a bulkhead element (26) substantially extending in a radial direction, the bulkhead element (26) having a first side surface (41) and a second side surface (42) facing in opposite longitudinal directions and a first peripheral edge facing the inner blade surface (41) of the wind turbine blade (5) when installed, wherein outer dimensions of the bulkhead element (26) substantially corresponds to inner dimensions of the blade root portion (14), the bulkhead unit (19) further comprises a supporting frame structure (25) extending in the radial direction, the supporting frame structure (25) is configured to be attached to at least the bulkhead element (26) and to be arranged relative to said first or second side surface (41 ,42), wherein said supporting frame structure (25) is configured to provide support for mounting of additional components, **characterised in that** the supporting frame structure (25) comprises at least one set of frame elements (47, 48) extending in at least one direction, wherein said at least one set of frame elements (47, 48) is arranged relative to at least one opening (27, 28, 29) formed in the bulkhead element (26), said at least one set of frame elements (47, 48) comprises a number of first frame elements and, optionally, a number of second frame elements, wherein the first frame elements and, optionally the second frame elements, are interconnected to divide a surface area of the bulkhead element (26) into a plurality of enclosed areas and/or open ended areas.

2. A bulkhead unit according to claim 1, **characterised in that** the bulkhead element (26) comprises at least one peripheral flange (31) configured to be attached to the blade shell (11) of the wind turbine blade (5), wherein said at least one peripheral flange (31) projects in one longitudinal direction from the first or second side surface (41, 42).

3. A bulkhead unit according to claim 1 or 2, **characterised in that** the supporting frame structure (25) has a second peripheral edge facing the inner blade surface (37) of the wind turbine blade (5), when installed, wherein said second peripheral edge is retracted relative the first peripheral edge.

4. A bulkhead unit according to claim 1, **characterised in that** at least one enclosed area of said plurality of enclosed areas or at least one open ended area of said plurality of open ended areas has inner dimensions substantially equal to or greater than inner dimensions of at least one opening (27, 28, 29) formed in the bulkhead element (26).

5. A bulkhead unit according to any one of claims 1 to 4, **characterised in that** the bulkhead element (26) comprises a central part (43) and a peripheral part (44), wherein said central part (43') is configured to be attached to said peripheral part (44).

6. A bulkhead unit according to any one of claims 2 to 5, **characterised in that** said supporting frame structure (25) is contacting or spaced apart from the first or second side surface (41, 42), wherein the supporting frame structure (25) is attached to at least the at least one peripheral flange (31) or a central part (43) of the bulkhead element (26).

7. A bulkhead unit according to any one of claims 1 to 6, **characterised in that** the supporting frame structure (25) is positioned on one side of the bulkhead element (26) and at least one of said additional components is positioned on an opposite side of the bulkhead element (26).

8. A wind turbine blade (5) extending from a blade root (7) to a tip end (8) in a longitudinal direction and further from a leading edge (9) to a trailing edge (10) in a chordwise direction, the wind turbine blade (5) comprising a blade shell (11) having an inner surface (37) and an outer surface (36) defining a pressure side and a suction side, the blade shell (11) comprises a blade root portion (14) extending from the blade root (7), wherein a bulkhead unit (19) is arranged within the blade root portion (14) and attached to the blade shell (11), **characterised in that** the bulkhead unit (19) is configured according to any one of claims 1 to 7.

9. A wind turbine blade according to claim 8, **characterised in that** at least one heater or blower unit (20, 21) forming part of a de-icing system is arranged within the wind turbine blade (5), wherein said at least one heater or blower unit (20 ,21) is mounted to the supporting frame structure (25) of the bulkhead unit (19).

10. A wind turbine blade according to claim 9, **characterised in that** said at least one heater or blower unit (20, 21) and the supporting frame structure (25) are positioned on opposite sides or on the same side of the bulkhead element (26).

11. A wind turbine blade according to claim 9 or 10, **characterised in that** further additional components are mounted to the supporting frame structure (25), wherein said further additional components form part of at least one further system.

12. A method of assembling a bulkhead unit (19) according to any one of claims 1-7, comprising the steps of:
- providing a bulkhead element (26) substantially extending in a radial direction, the bulkhead element (26) having a first side surface (41) and a second side surface (42) facing in opposite longitudinal directions and a first peripheral edge, wherein outer dimensions of the bulkhead element (26) substantially corresponds to inner dimensions of a blade root portion (14) of the wind turbine blade (5),
- further providing a supporting frame structure (25) extending in the radial direction, the supporting frame structure (25) having a third side and a fourth side facing in opposite longitudinal directions and a second peripheral edge,
- positioning said supporting frame structure (25) relative to the first or second side surface of the bulkhead element (26),
- attaching said supporting frame structure (25) to the bulkhead element (26) so that the bulkhead element (26) and the supporting frame structure (25) form a pre-assembled unit,
- optionally, mounting at least one additional component to the supporting frame structure (25) of said pre-assembled unit.

13. A method according to claim 12, **characterised in that** the method further comprises at least one of the following steps:
- forming at least one opening (27, 28, 29) in the bulkhead element (26) prior to positioning the supporting frame structure (25), wherein said positioning of the supporting frame structure (25) further comprises aligning the supporting frame structure (25) relative to said at least one opening (27, 28, 29),
- forming at least one opening (27, 28, 29) in the bulkhead element (26) after said attaching of the supporting frame structure (25).

14. A method of installing a bulkhead unit (19) in a wind turbine blade, the wind turbine blade (5) extending from a blade root (7) to a tip end (8) in a longitudinal direction and further from a leading edge (9) to a trailing edge (10) in a chordwise direction, the wind turbine blade (5) comprising a blade shell (11) having an inner surface (37) and an outer surface (36) defining a pressure side and a suction side, the blade shell (11) comprises a blade root portion (14) extending from the blade root (7), **characterised in that** the method comprises the steps of:
- providing a bulkhead unit (19) according to any one of claims 1 to 7, wherein the bulkhead unit (19) is pre-assembled prior to installation,
- positioning said bulkhead unit (19) within the blade root section (14),
- attaching the bulkhead unit (19) to the blade shell (11) so that said bulkhead unit (19) substantially seals off the blade root (7).

15. A method according to claim 14, **characterised in that** the method further comprises mounting a lifting device (59) to said bulkhead unit (19) via first mounting means (60) and coupling said lifting device (59) to a lifting unit, wherein the bulkhead unit (19) is lifted into an installation position relative to the blade root (7) using said lifting unit.

16. A method according to claim 15, **characterised in that** the lifting device (59) further comprises second mounting means (61), wherein the bulkhead unit (19) is fixed in said installation position by connecting said second mounting means (61) to the wind turbine blade (5).

## Patentansprüche

1. Schotteinheit (19) für einen Windkraftanlagenflügel (5), wobei der Windkraftanlagenflügel (5) eine einen Flügelwurzelabschnitt (14) definierende Flügelschale (11) umfasst, die eine innere Flügeloberfläche (37) aufweist, wobei die Schotteinheit (19) ein Schottelement (26) umfasst, das sich im Wesentlichen in einer Radialrichtung erstreckt, wobei das Schottelement (26) eine Oberfläche einer ersten Seite (41) und eine Oberfläche einer zweiten Seite (42), die in entgegengesetzte Längsrichtungen weisen, und einen ersten Umfangsrand, der, wenn installiert, der inneren Flügeloberfläche (41) des Windkraftanlagenflügels (5) zugewandt ist, aufweist, wobei die Außenabmessungen des Schottelements (26) im Wesentlichen den Innenabmessungen des Flügelwurzelabschnitts (14) entsprechen, wobei die Schotteinheit (19) ferner eine Stützrahmenkonstruktion (25) umfasst, die sich in der Radialrichtung erstreckt, wobei die Stützrahmenkonstruktion (25) dazu konfiguriert ist, an mindestens dem Schottelement (26) angebracht zu werden und relativ zu der Oberfläche der ersten oder der zweiten Seite (41, 42) angeordnet zu werden, wobei die Stützrahmenkonstruktion (25) dazu konfiguriert ist, Abstützung für die Befestigung von zusätzlichen Komponenten bereitzustellen, **dadurch gekennzeichnet, dass** die Stützrahmenkonstruktion (25) mindestens einen Satz von Rahmenelementen (47, 48) umfasst, die sich in mindestens einer Richtung erstrecken, wobei der mindestens eine Satz von Rahmenelementen (47, 48) relativ zu mindestens einer in dem Schottelement (26) gebildeten Öffnung (27, 28, 29) angeordnet ist, wobei der mindestens eine Satz von Rahmenelementen (47, 48) eine Anzahl von ersten Rahmenelementen und optional eine Anzahl von zweiten Rahmenelementen umfasst, wobei die ersten Rahmenelemente und optional die zweiten Rahmenelemente miteinander verbunden sind, um einen Oberflächenbereich des Schottelements (26) in eine Vielzahl von umschlossenen Bereichen und/oder offenendigen Bereichen zu teilen.

2. Schotteinheit nach Anspruch 1, **dadurch gekennzeichnet, dass** das Schottelement (26) mindestens einen Umfangsflansch (31) umfasst, der dazu konfiguriert ist, an der Flügelschale (11) des Windkraftanlagenflügels (5) angebracht zu werden, wobei der mindestens eine Umfangsflansch (31) in einer Längsrichtung von der Oberfläche der ersten oder der zweiten Seite (41, 42) vorsteht.

3. Schotteinheit nach Anspruch 1 oder 2, **dadurch gekennzeichnet, dass** die Stützrahmenkonstruktion (25) einen zweiten Umfangsrand aufweist, der, wenn installiert, der inneren Flügeloberfläche (37) des Windkraftanlagenflügels (5) zugewandt ist, wobei der zweite Umfangsrand relativ zu dem ersten Umfangsrand zurückgesetzt ist.

4. Schotteinheit nach Anspruch 1, **dadurch gekennzeichnet, dass** mindestens ein umschlossener Bereich der Vielzahl von umschlossenen Bereichen oder mindestens ein offenendiger Bereich der Vielzahl von offenendigen Bereichen Innenabmessungen aufweist, die im Wesentlichen gleich den oder größer als die Innenabmessungen mindestens einer in dem Schottelement (26) gebildeten Öffnung (27, 28, 29) sind.

5. Schotteinheit nach einem der Ansprüche 1 bis 4, **dadurch gekennzeichnet, dass** das Schottelement (26) einen Mittelteil (43) und einen Umfangsteil (44) umfasst, wobei der Mittelteil (43') dazu konfiguriert ist, an dem Umfangsteil (44) angebracht zu werden.

6. Schotteinheit nach einem der Ansprüche 2 bis 5, **dadurch gekennzeichnet, dass** sich die Stützrahmenkonstruktion (25) mit der Oberfläche der ersten oder der zweiten Seite (41, 42) in Kontakt befindet oder davon beabstandet ist, wobei die Stützrahmenkonstruktion (25) an mindestens dem mindestens einen Umfangsflansch (31) oder einem Mittelteil (43) des Schottelements (26) angebracht ist.

7. Schotteinheit nach einem der Ansprüche 1 bis 6, **dadurch gekennzeichnet, dass** die Stützrahmenkonstruktion (25) auf einer Seite des Schottelements (26) positioniert ist und mindestens eine der zusätzlichen Komponenten auf einer gegenüberliegenden Seite des Schottelements (26) positioniert ist.

8. Windkraftanlagenflügel (5), der sich von einer Flügelwurzel (7) zu einem Spitzenende (8) in einer Längsrichtung und ferner von einer Eintrittskante (9) zu einer Austrittskante (10) in einer Sehnenrichtung erstreckt, wobei der Windkraftanlagenflügel (5) eine Flügelschale (11) mit einer inneren Oberfläche (37) und einer äußeren Oberfläche (36), die eine Druckseite und eine Saugseite definieren, umfasst, wobei die Flügelschale (11) einen Flügelwurzelabschnitt (14) umfasst, der sich von der Flügelwurzel (7) erstreckt, wobei eine Schotteinheit (19) in dem Flügelwurzelabschnitt (14) angeordnet und an der Flügelschale (11) angebracht ist, **dadurch gekennzeichnet, dass** die Schotteinheit (19) nach einem der Ansprüche 1 bis 7 konfiguriert ist.

9. Windkraftanlagenflügel nach Anspruch 8, **dadurch gekennzeichnet**, mindestens eine Heizungs- oder Gebläseeinheit (20, 21), die einen Teil eines Enteisungssystems bildet, in dem Windkraftanlagenflügel (5) angeordnet ist, wobei die mindestens eine Heizungs- oder Gebläseeinheit (20, 21) an der Stützrahmenkonstruktion (25) der Schotteinheit (19) befestigt ist.

10. Windkraftanlagenflügel nach Anspruch 9, **dadurch gekennzeichnet, dass** die mindestens eine Heizungs- oder Gebläseeinheit (20, 21) und die Stützrahmenkonstruktion (25) auf gegenüberliegenden Seiten oder auf derselben Seite des Schottelements (26) positioniert sind.

11. Windkraftanlagenflügel nach Anspruch 9 oder 10, **dadurch gekennzeichnet, dass** weitere zusätzliche Komponenten an der Stützrahmenkonstruktion (25) befestigt sind, wobei die weiteren zusätzlichen Komponenten einen Teil mindestens eines weiteren Systems bilden.

12. Verfahren zum Montieren einer Schotteinheit (19) nach einem der Ansprüche 1-7, umfassend folgende Schritte:
- Bereitstellen eines Schottelements (26), das sich im Wesentlichen in einer Radialrichtung erstreckt, wobei das Schottelement (26) eine Oberfläche einer ersten Seite (41) und eine Oberfläche einer zweiten Seite (42), die in entgegengesetzte Längsrichtungen weisen, und einen ersten Umfangsrand aufweist, wobei die Außenabmessungen des Schottelements (26) im Wesentlichen den Innenabmessungen eines Flügelwurzelabschnitts (14) des Windkraftanlagenflügels (5) entsprechen,
- ferner Bereitstellen einer Stützrahmenkonstruktion (25), die sich in der Radialrichtung erstreckt, wobei die Stützrahmenkonstruktion (25) eine dritte Seite und eine vierte Seite, die in entgegengesetzte Längsrichtungen weisen, und einen zweiten Umfangsrand aufweist,
- Positionieren der Stützrahmenkonstruktion (25) relativ zu der Oberfläche der ersten oder der zweiten Seite des Schottelements (26),
- Anbringen der Stützrahmenkonstruktion (25) an dem Schottelement (26), sodass das Schottelement (26) und die Stützrahmenkonstruktion (25) eine vormontierte Einheit bilden,
- optionales Befestigen mindestens einer zusätzlichen Komponente an der Stützrahmenkonstruktion (25) der vormontierten Einheit.

13. Verfahren nach Anspruch 12, **dadurch gekennzeichnet, dass** das Verfahren ferner mindestens einen der folgenden Schritte umfasst:
- Bilden mindestens einer Öffnung (27, 28, 29) in dem Schottelement (26) vor dem Positionieren der Stützrahmenkonstruktion (25), wobei das Positionieren der Stützrahmenkonstruktion (25) ferner das Ausrichten der Stützrahmenkonstruktion (25) relativ zu der mindestens einen Öffnung (27, 28, 29) umfasst,
- Bilden mindestens einer Öffnung (27, 28, 29) in dem Schottelement (26) nach dem Anbringen der Stützrahmenkonstruktion (25).

14. Verfahren zum Installieren einer Schotteinheit (19) in einem Windkraftanlagenflügel, wobei sich der Windkraftanlagenflügel (5) von einer Flügelwurzel (7) zu einem Spitzenende (8) in einer Längsrichtung und ferner von einer Eintrittskante (9) zu einer Austrittskante (10) in einer Sehnenrichtung erstreckt, wobei der Windkraftanlagenflügel (5) eine Flügelschale (11) mit einer inneren Oberfläche (37) und einer äußeren Oberfläche (36), die eine Druckseite und eine Saugseite definieren, umfasst, wobei die Flügelschale (11) einen Flügelwurzelabschnitt (14) umfasst, der sich von der Flügelwurzel (7) erstreckt, **dadurch gekennzeichnet, dass** das Verfahren folgende Schritte umfasst:
- Bereitstellen einer Schotteinheit (19) nach einem der Ansprüche 1 bis 7, wobei die Schotteinheit (19) vor der Installation vormontiert wird,
- Positionieren der Schotteinheit (19) in dem Flügelwurzelabschnitt (14),
- Anbringen der Schotteinheit (19) an der Flügelschale (11), sodass die Schotteinheit (19) die Flügelwurzel (7) im Wesentlichen abschottet.

15. Verfahren nach Anspruch 14, **dadurch gekennzeichnet, dass** das Verfahren ferner das Befestigen einer Hebevorrichtung (59) an der Schotteinheit (19) über erste Befestigungsmittel (60) und das Koppeln der Hebevorrichtung (59) an eine Hebeeinheit umfasst, wobei die Schotteinheit (19) unter Verwendung der Hebeeinheit in eine Installationslage relativ zu der Flügelwurzel (7) gehoben wird.

16. Verfahren nach Anspruch 15, **dadurch gekennzeichnet, dass** die Hebevorrichtung (59) ferner zweite Befestigungsmittel (61) umfasst, wobei die Schotteinheit (19) durch Verbinden der zweiten Befestigungsmittel (61) mit dem Windkraftanlagenflügel (5) in der Installationslage fixiert wird.

## Revendications

1. Unité formant cloison (19) pour une pale d'éolienne (5), la pale d'éolienne (5) comportant une coque de pale (11) définissant une partie de pied de pale (14) ayant une surface de pale intérieure (37), dans laquelle l'unité formant cloison (19) comporte un élément de cloison (26) s'étendant sensiblement dans une direction radiale, l'élément de cloison (26) ayant une première surface latérale (41) et une deuxième surface latérale (42) orientées dans des directions longitudinales opposées et un premier bord périphérique orienté vers la surface de pale intérieure (41) de la pale d'éolienne (5) quand il est installé, dans laquelle des dimensions extérieures de l'élément de cloison (26) correspondent sensiblement à des dimensions intérieures de la partie de pied de pale (14), l'unité formant cloison (19) comporte par ailleurs une structure formant cadre de support (25) s'étendant dans la direction radiale, la structure formant cadre de support (25) est configurée pour être attachée sur au moins l'élément de cloison (26) et pour être agencée par rapport à ladite première ou deuxième surface latérale (41, 42), dans laquelle ladite structure formant cadre de support (25) est configurée pour mettre en œuvre un support à des fins de montage de composants supplémentaires, **caractérisée en ce que** la structure formant cadre de support (25) comporte au moins un ensemble d'éléments de cadre (47, 48) s'étendant dans au moins une direction, dans laquelle ledit au moins un ensemble d'éléments de cadre (47, 48) est agencé par rapport à au moins une ouverture (27, 28, 29) formée dans l'élément de cloison (26), ledit au moins un ensemble d'éléments de cadre (47, 48) comporte un certain nombre de premiers éléments de cadre et, éventuellement, un certain nombre de deuxièmes éléments de cadre, dans laquelle les premiers éléments de cadre et, éventuellement, les deuxièmes éléments de cadre, sont interconnectés pour diviser une surface de l'élément de cloison (26) en une pluralité de zones renfermées et/ou de zones à extrémités ouvertes.

2. Unité formant cloison selon la revendication 1, **caractérisée en ce que** l'élément de cloison (26) comporte au moins une bride périphérique (31) configurée pour être attachée sur la coque de pale (11) de la pale d'éolienne (5), dans laquelle ladite au moins une bride périphérique (31) se projette dans une direction longitudinale depuis la première ou deuxième surface latérale (41, 42).

3. Unité formant cloison selon la revendication 1 ou la revendication 2, **caractérisée en ce que** la structure formant cadre de support (25) a un deuxième bord périphérique orienté vers la surface de pale intérieure (37) de la pale d'éolienne (5), quand elle est installée, dans laquelle ledit deuxième bord périphérique est rétracté par rapport au premier bord périphérique.

4. Unité formant cloison selon la revendication 1, **caractérisée en ce qu'**au moins une zone renfermée de ladite pluralité de zones renfermées ou au moins une zone à extrémités ouvertes de ladite pluralité de zones à extrémités ouvertes a des dimensions intérieures sensiblement égales ou supérieures aux dimensions intérieures d'au moins une ouverture (27, 28, 29) formée dans l'élément de cloison (26).

5. Unité formant cloison selon l'une quelconque des revendications 1 à 4, **caractérisée en ce que** l'élément de cloison (26) comporte une partie centrale (43) et une partie périphérique (44), dans laquelle ladite partie centrale (43') est configurée pour être attachée sur ladite partie périphérique (44).

6. Unité formant cloison selon l'une quelconque des revendications 2 à 5, **caractérisée en ce que** ladite structure formant cadre de support (25) est en contact ou espacée par rapport à la première ou deuxième surface latérale (41, 42), dans laquelle la structure formant cadre de support (25) est attachée sur au moins ladite au moins une bride périphérique (31) ou une partie centrale (43) de l'élément de cloison (26).

7. Unité formant cloison selon l'une quelconque des revendications 1 à 6, **caractérisée en ce que** la structure formant cadre de support (25) est positionnée sur un côté de l'élément de cloison (26) et au moins l'un desdits composants supplémentaires est positionné sur un côté opposé de l'élément de cloison (26).

8. Pale d'éolienne (5) s'étendant en provenance d'un pied de pale (7) jusqu'à une extrémité de bout (8) dans une direction longitudinale et par ailleurs depuis un bord d'attaque (9) jusqu'à un bord de fuite (10) dans une direction allant dans le sens de la corde, la pale d'éolienne (5) comportant une coque de pale (11) ayant une surface intérieure (37) et une surface extérieure (36) définissant un côté en pression et un côté en dépression, la coque de pale (11) comporte une partie de pied de pale (14) s'étendant depuis le pied de pale (7), dans laquelle une unité formant cloison (19) est agencée à l'intérieur de la partie de pied de pale (14) et attachée sur la coque de pale (11), **caractérisée en ce que** l'unité formant cloison (19) est configurée selon l'une quelconque des revendications 1 à 7.

9. Pale d'éolienne selon la revendication 8, **caractérisée en ce qu'**au moins une unité formant corps de chauffe ou soufflante (20, 21) faisant partie d'un système de dégivrage est agencée à l'intérieur de la pale d'éolienne (5), dans laquelle ladite au moins une unité formant corps de chauffe ou soufflante (20, 21) est montée sur la structure formant cadre de support (25) de l'unité formant cloison (19).

10. Pale d'éolienne selon la revendication 9, **caractérisée en ce que** ladite au moins une unité formant corps de chauffe ou soufflante (20, 21) et la structure formant cadre de support (25) sont positionnées sur des côtés opposés ou sur le même côté de l'élément de cloison (26).

11. Pale d'éolienne selon la revendication 9 ou la revendication 10, **caractérisée en ce que** d'autres composants supplémentaires sont montés sur la structure formant cadre de support (25), dans laquelle lesdits autres composants supplémentaires font partie d'au moins un autre système.

12. Procédé d'assemblage d'une unité formant cloison (19) selon l'une quelconque des revendications 1 à 7, comportant les étapes consistant à :
- mettre en œuvre un élément de cloison (26) s'étendant sensiblement dans une direction radiale, l'élément de cloison (26) ayant une première surface latérale (41) et une deuxième surface latérale (42) orientées dans des directions longitudinales opposées et un premier bord périphérique, dans lequel des dimensions extérieures de l'élément de cloison (26) correspondent sensiblement à des dimensions intérieures d'une partie de pied de pale (14) de la pale d'éolienne (5),
- mettre par ailleurs en œuvre une structure formant cadre de support (25) s'étendant dans la direction radiale, la structure formant cadre de support (25) ayant un troisième côté et un quatrième côté orientés dans des directions longitudinales opposées et un deuxième bord périphérique,
- positionner ladite structure formant cadre de support (25) par rapport à ladite première ou deuxième surface latérale de l'élément de cloison (26),
- attacher ladite structure formant cadre de support (25) sur l'élément de cloison (26) de telle sorte que l'élément de cloison (26) et la structure formant cadre de support (25) forment une unité préassemblée,
- éventuellement, monter au moins un composant supplémentaire sur la structure formant cadre de support (25) de ladite unité préassemblée.

13. Procédé selon la revendication 12, **caractérisé en ce que** le procédé comporte par ailleurs au moins l'une des étapes suivantes consistant à :
- former au moins une ouverture (27, 28, 29) dans l'élément de cloison (26) avant de positionner la structure formant cadre de support (25), dans lequel ledit positionnement de la structure formant cadre de support (25) comporte par ailleurs l'étape consistant à aligner la structure formant cadre de support (25) par rapport à ladite au moins une ouverture (27, 28, 29),
- former au moins une ouverture (27, 28, 29) dans l'élément de cloison (26) après ladite attache de la structure formant cadre de support (25).

14. Procédé servant à installer une unité formant cloison (19) dans une pale d'éolienne, la pale d'éolienne (5) s'étendant en provenance d'un pied de pale (7) jusqu'à une extrémité de bout (8) dans une direction longitudinale et par ailleurs depuis un bord d'attaque (9) jusqu'à un bord de fuite (10) dans une direction allant dans le sens de la corde, la pale d'éolienne (5) comportant une coque de pale (11) ayant une surface intérieure (37) et une surface extérieure (36) définissant un côté en pression et un côté en dépression, la coque de pale (11) comporte une partie de pied de pale (14) s'étendant depuis le pied de pale (7), **caractérisé en ce que** le procédé comporte les étapes consistant à :
- mettre un œuvre une unité formant cloison (19) selon l'une quelconque des revendications 1 à 7, dans lequel l'unité formant cloison (19) est préassemblée avant l'installation,
- positionner ladite unité formant cloison (19) à l'intérieur de la section de pied de pale (14),
- attacher l'unité formant cloison (19) sur la coque de pale (11) de telle sorte que ladite unité formant cloison (19) scelle sensiblement le pied de pale (7).

15. Procédé selon la revendication 14, **caractérisé en ce que** le procédé comporte par ailleurs l'étape consistant à monter un dispositif de levage (59) sur ladite unité formant cloison (19) par le biais de premiers moyens de montage (60) et l'étape consistant à accoupler ledit dispositif de levage (59) à une unité de levage, dans lequel l'unité formant cloison (19) est soulevée jusque dans une position d'installation par rapport au pied de pale (7) en utilisant ladite unité de levage.

16. Procédé selon la revendication 15, **caractérisé en ce que** le dispositif de levage (59) comporte par ailleurs des deuxièmes moyens de montage (61), dans lequel l'unité formant cloison (19) est fixée dans ladite position d'installation en raccordant lesdits deuxièmes moyens de montage (61) sur la pale d'éolienne (5).
